# EUROPEAN PATENT APPLICATION

(11) **EP 4 502 439 A1**
(43) Date of publication of application: **05.02.2025**
(21) Application number: 23780719.3
(22) Date of filing: 29.03.2023
(51) Int. Cl.: F16K 31/06, H01F 7/06, H01F 7/16, B60T 8/36

(54) **ELECTRICAL COMPONENT ASSEMBLY, ELECTRICAL COMPONENT ASSEMBLY MANUFACTURING METHOD, AND VEHICLE BRAKE HYDRAULIC PRESSURE CONTROL DEVICE**

(30) Priority: 31.03.2022 JP 2022061056
(71) Applicant: Hitachi Astemo, Ltd., Ibaraki 312-8503 (JP)
(72) Inventor: OTA, Kazuhiro, Hitachinaka-shi, Ibaraki 312-8503 (JP); CHIBA, Kentaro, Hitachinaka-shi, Ibaraki 312-8503 (JP); NOHARA, Misato, Hitachinaka-shi, Ibaraki 312-8503 (JP)
(74) Representative: Dehns
(86) International application number: PCT/JP2023/012864
(87) International publication number: WO 2023/190711

(57) **Abstract**

Provided are: an electronical component assembly which can simplify the structure of a housing, has excellent assembly properties for an electrical component, and can reduce costs; an electrical component assembly manufacturing method; and a vehicle brake hydraulic pressure control device. This electrical component assembly (1) is formed by attaching a control substrate assembly (3) to a housing (2). The control substrate assembly (3) includes a control substrate (11), and an electrical component (17) attached to the control substrate (11) through a connection terminal (14). The control substrate (11) includes securing holes (18) for securing the electrical component (17), and the electrical component (17) includes a terminal body part (17a) with which the connection terminal (14) is integrated by resin, and securing protrusions (17b) that are provided to the terminal body portion (17a) and fitted into the securing holes (18).

## Description

### TECHNICAL FIELD

The present invention relates to an electrical component assembly, a method of manufacturing the electrical component assembly, and a vehicle brake hydraulic pressure control device.

### BACKGROUND ART

Conventionally, it is known that vehicles such as motorcycles and four-wheeled vehicles are equipped in their brake system with a brake hydraulic pressure control device that controls brake hydraulic pressure acting on the wheel brakes. The vehicle brake hydraulic pressure control device includes a base body with an internal brake fluid passage and a solenoid valve attached to one surface of the base body. An electrical component assembly is attached to one surface of the base body; the electrical component assembly includes a coil assembly, a bus bar terminal body, and a connector terminal body as electrical components, covered by a housing. The electrical components such as the coil assembly are connected to a control board disposed in the housing.

A known method for mounting the control board in the housing is disclosed in Patent Literature 1. In Patent Literature 1, the method involves mounting the electrical components in the housing in advance, aligning each of the through-holes of the control board with the tip end portion of each of the connecting terminals of the preassembled electrical components, and pushing the control board toward the electrical components. This enables the connecting terminals of the electrical components to be pressed into the through-holes of the control board, thereby electrically connecting the electrical components to the control board.

### CITATION LIST

### Patent Literature

Patent Literature 1: JP WO2018/151264 A1

### SUMMARY OF INVENTION

### Technical Problem

However, the assembling method disclosed in Patent Literature 1 involves aligning the connecting terminals of the electrical components with the through-holes of the control board via the housing. As a result, the structure of the housing becomes complicated, and high dimensional accuracy and high assembly accuracy are required for each electrical component and the housing involved in the alignment, leading to increased costs.

The present invention aims to solve the aforementioned problem by providing an electrical component assembly, a method of manufacturing the electrical component assembly, and a vehicle brake hydraulic pressure control device, which can simplify the structure of the housing, enhance the ease of assembly of the electrical component, and reduce costs.

### Solution to Problem

To solve the above problem, an electrical component assembly according to the present invention is configured by mounting a control board assembly in a housing. The control board assembly comprises a control board and an electrical component mounted on the control board via connecting terminals.

According to the present invention, it is possible to adopt an assembling method, in which an electrical component is mounted on a control board in advance to form a control board assembly, and then this control board assembly is mounted in a housing. Therefore, there is no need to use a conventional assembling method, which requires that an electrical component is mounted in a housing in advance, and then a control board is mounted in the housing while aligning connecting terminals of the electrical component with the control board (through-holes of the control board). Consequently, high dimensional accuracy and high assembly accuracy required for aligning the connecting terminals of the electrical component with the control board (through-holes of the control board) are not required, and the structure of the housing can be simplified.

Further, since there is no need to insert-mold terminals for connecting the electrical component to the control board into the housing, the options for electrical connection methods can be increased.

Further, since the electrical component assembly can be formed simply by mounting the control board assembly in the housing, the ease of assembly can be enhanced. As a result, the electrical component assembly according to the present invention can reduce costs.

Preferably, the control board has fixing holes for fixing the electrical component, and the electrical component includes a terminal main body in which the connecting terminals are integrated with resin, and fixing projections provided on the terminal main body and fitted into the fixing holes.

With this configuration, the terminal main body can be fixed to the control board by fitting the fixing projections of the terminal main body into the fixing holes of the control board. Further, since the terminal main body can be directly fixed to the control board, the attachment strength is improved, and even when an unintentional external force is applied to the terminal main body, the fixing projections resist the external force. This can effectively prevent an external force load from being applied to a portion where the connecting terminals and the control board are electrically connected.

Preferably, the connecting terminals are press-fit terminals inserted into through-holes formed in the control board.

With this configuration, the electrical component and the control board can be easily connected, thereby enhancing the ease of assembly.

The electrical component assembly preferably comprises: board positioning holes formed in the control board for fixing the control board to the housing; and housing-side projections formed on the housing for fixing the control board and fitted into the board positioning holes.

With this configuration, the control board assembly can be fixed to the housing by fitting the housing-side projections of the housing into the board positioning holes of the control board. Therefore, the control board assembly can be easily mounted in the housing, thereby enhancing the ease of assembly.

Preferably, the electrical component in the control board assembly is either one of a coil assembly for driving a solenoid valve, a bus bar terminal body connected to an electric motor, and a connector terminal body.

With this configuration, a cost-reduced electrical component assembly can be obtained.

A vehicle brake hydraulic pressure control device according to the present invention is equipped with the electrical component assembly as described above. The vehicle brake hydraulic pressure control device is connected between a master cylinder and a wheel brake to control brake hydraulic pressure acting on the wheel brake.

With this configuration of the vehicle brake hydraulic pressure control device according to the present invention, the electrical component can be reliably connected to the control board, so that the quality of the product can be improved and the reliability of brake hydraulic pressure control by the device can be improved as well. Further, the vehicle brake hydraulic pressure control device can reduce costs.

Further, the present invention provides a method of manufacturing the electrical component assembly as described above, comprising the steps of: an electrical component setting step of setting the electrical component on an assembly jig; an assembling step of setting the control board on the assembly jig, and electrically connecting the connecting terminals of the electrical component set on the assembly jig in the electrical component setting step to the control board to assemble the control board assembly; and a control board assembly setting step of setting the control board assembly assembled in the assembling step in the housing.

The method of manufacturing the electrical component assembly according to the present invention allows for positioning of the electrical component using the assembly jig, so that the positioning accuracy of the electrical component is improved. Further, since the connecting terminals of the electrical component are connected to the control board using the assembly jig, high dimensional accuracy and high assembly accuracy for aligning the electrical component with the control board are not required. This can enhance the ease of assembly and reduce costs.

Further, the present invention provides a method of manufacturing the electrical component assembly as described above, comprising the steps of: an electrical component setting step of setting the electrical component on an assembly jig; an assembling step of setting the control board on the assembly jig, and electrically connecting the connecting terminals of the electrical component set on the assembly jig in the electrical component setting step to the control board to assemble the control board assembly; and a control board assembly setting step of setting the control board assembly assembled in the assembling step in the housing, wherein the control board assembly setting step comprises the steps of: fitting the housing-side projections into the board positioning holes; and heat staking the housing-side projections.

The method of manufacturing the electrical component assembly according to the present invention allows for positioning of the electrical component using the assembly jig, so that the positioning accuracy of the electrical component is improved. Further, since the connecting terminals of the electrical component are connected to the control board using the assembly jig, high dimensional accuracy and high assembly accuracy for aligning the electrical component with the control board are not required. This can enhance the ease of assembly and reduce costs.

Further, the control board assembly can be reliably fixed to the housing by heat staking. Therefore, the control board assembly can be positioned to the housing with high precision.

### Advantageous Effects of Invention

The electrical component assembly, the method of manufacturing an electrical component assembly, and the vehicle brake hydraulic pressure control device according to the present invention can simplify the structure of the housing, enhance the ease of assembly of the electrical component, and reduce costs.

### BRIEF DESCRIPTION OF DRAWINGS

FIG. 1 is a perspective view showing a vehicle brake hydraulic pressure control device, in which an electrical component assembly according to a first embodiment of the present invention is mounted.
FIG. 2 is a perspective view showing the electrical component assembly according to the first embodiment of the present invention.
FIG. 3 is a perspective view showing how a control board assembly is mounted in a housing in the electrical component assembly according to the first embodiment of the present invention.
FIG. 4 is an enlarged cross-sectional view taken along the line IV-IV of FIG. 3.
FIG. 5 is a perspective view showing an assembly jig used for assembling the control board assembly of the electrical component assembly according to the first embodiment of the present invention.
FIG. 6 is a perspective view showing the assembly jig with electrical components mounted thereon.
FIG. 7 is a perspective view showing the state in which a control board is mounted on the assembly jig with the electrical components mounted thereon.
FIGS. 8A and 8B show a connector terminal body used in an electrical component assembly according to a second embodiment of the present invention, in which FIG. 8A is a front view and FIG. 8B is a side view.
FIG. 9A and 9B are cross-sectional views of the connector terminal body, in which FIG. 9A is a cross-sectional view taken along the line IX-IX of FIG. 8B and FIG. 9B is partial cross-sectional side view.
FIGS. 10A and 10B show another form of connector terminal body used in the electrical component assembly according to the second embodiment of the present invention, in which FIG. 10A is a front view and FIG. 10B is a side view.
FIGS. 11A and 11B are cross-sectional views of the another form of connector terminal body, in which FIG. 11A is a cross-sectional view taken along the line XI-XI of FIG. 10B and FIG. 11B is a partial cross-sectional side view.
FIG. 12 is an exploded perspective view showing another assembling method of the control board assembly.

### DESCRIPTION OF EMBODIMENTS

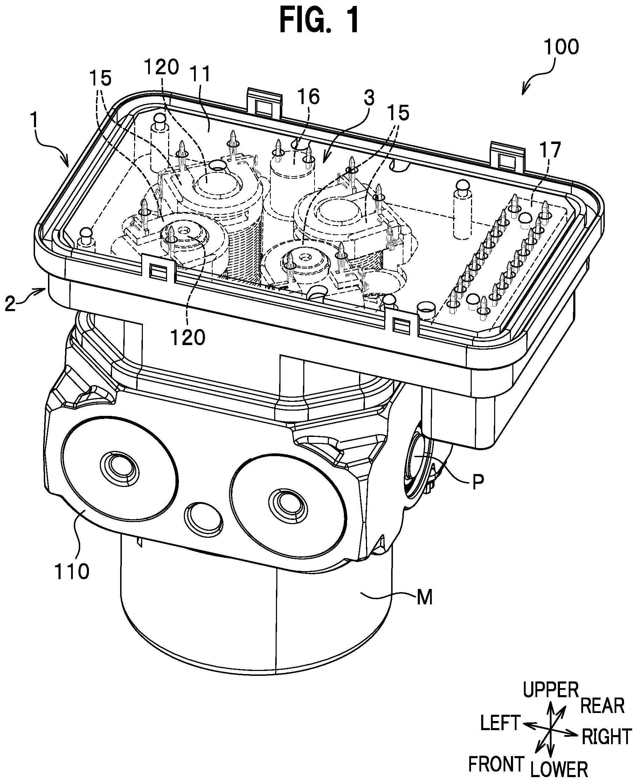

Hereinafter, embodiments of the present invention will be described in detail with reference to the accompanying drawings as appropriate. In the following description, the same reference signs will be used for identical elements, and duplicated descriptions will be omitted. In the following description, an electrical component assembly that functions as a component of a vehicle brake hydraulic pressure control device will be described. However, this is not intended to limit the application of the electrical component assembly. When referring to front, rear, right, left, upper, and lower directions of a vehicle brake hydraulic pressure control device, an electrical component assembly, and a control board assembly, the reference is made based on the state where a control board is placed on electrical components (directions shown in FIG. 1, etc.). However, this is not intended to limit each direction. These directions do not necessarily correspond to the front, rear, right, left, upper, and lower directions of the electrical component assembly when in use (when mounted on a vehicle, etc.).

### FIRST EMBODIMENT

A vehicle brake hydraulic pressure control device 100 is connected between a master cylinder (not shown) and wheel brakes to control brake hydraulic pressure acting on the wheel brakes.

As seen in FIG. 1, the vehicle brake hydraulic pressure control device 100 includes a base body 110 and an electrical component assembly 1 attached to one surface of the base body 110. Solenoid valves 120 corresponding to brake systems mounted on a vehicle, various sensors such as pressure sensors (not shown), an electric motor M, and a reciprocating pump P are attached to the base body 110. The electrical component assembly 1 functions as an electronic control unit that detects the behavior of the vehicle body and controls the opening and closing of the solenoid valves 120 and the operation of the electric motor M.

The base body 110 is a metal component formed in a generally rectangular prism shape, in which brake fluid paths (oil paths), not shown, are formed. Ports and the like for connecting the piping that leads to the wheel brakes are formed at an outer surface (not shown) of the base body 110. The vehicle brake hydraulic pressure control device 100 varies the brake fluid pressure within the brake fluid passages by operating the solenoid valves 120 and the electric motor M through the control board 11 in the electrical component assembly 1, based on the behavior of the vehicle.

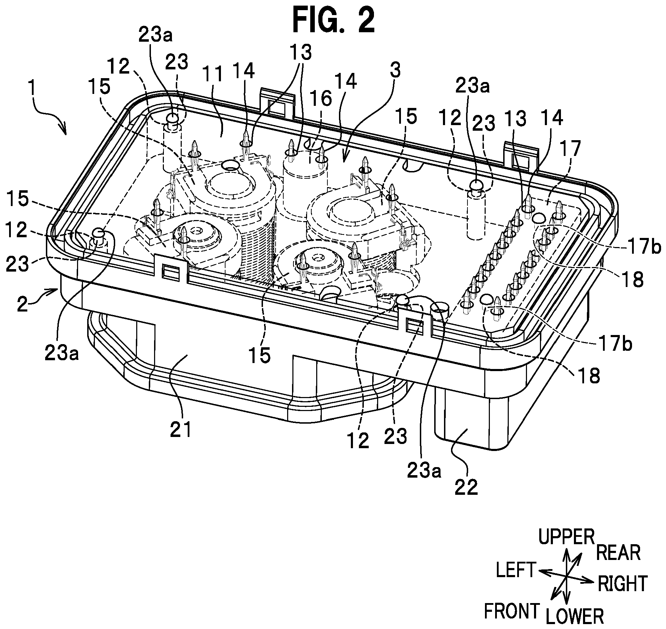

As seen in FIG. 2, the electrical component assembly 1 includes a housing 2 made of plastic resin and a control board assembly 3 mounted in the housing 2. The housing 2 is a box body integrally fixed to an upper surface of the base body 110 (see FIG. 1) by means such as screw fastening. As seen in FIG. 1, the housing 2 houses the control board assembly 3 and also houses the solenoid valves 120 protruding from the base body 110 and a motor bus bar (not shown).

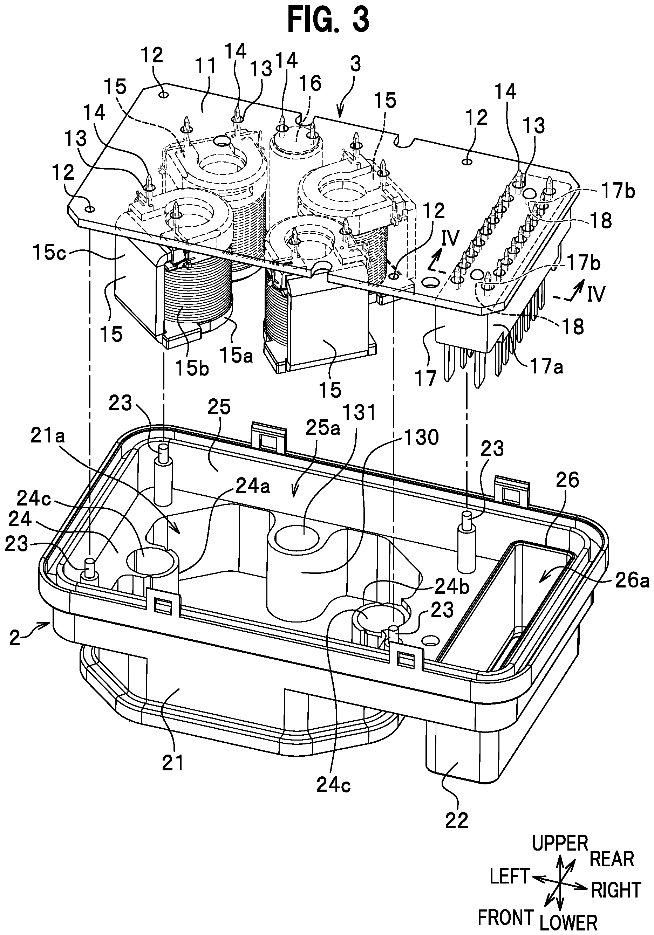

As seen in FIG. 3, the housing 2 is open at its upper surface side and lower surface side of FIG. 3. The upper surface side is the surface opposite the base body 110 (see FIG. 1, the same applies hereinafter), where a lid member (not shown) to be described later will be attached. The lower surface side is the base body 110 side. The housing 2 includes a plate-shaped bottom wall portion 24, a lid member-side peripheral wall portion 25 provided on the upper surface side of the bottom wall portion 24, and a base body-side peripheral wall portion 21 provided on the lower surface side of the bottom wall portion 24.

The bottom wall portion 24 has a generally rectangular outline that is larger in the right-left direction than in the front-rear direction, as shown in the figure. The lid member-side peripheral wall portion 25 extends upward from the peripheral edge portion of the bottom wall portion 24 and has a generally rectangular outer shape. A base body-side housing chamber 25a is formed inside the lid member-side peripheral wall portion 25. The base body-side housing chamber 25a is configured to house upper parts of electrical components such as the control board 11 having a generally rectangular shape, and coil assembles 15.

It is noted that an upper opening portion of the lid member-side peripheral wall portion 25 is sealed with a lid member (not shown) made of plastic resin. The lid member is fixed to the upper opening portion of the lid member-side peripheral wall portion 25 by means of welding, adhesion, screw fastening, or other means.

The base body-side peripheral wall portion 21 extends downward in the figure from a lower surface of the bottom wall portion 24, and has a generally octagonal outer shape (partially shown). The base body-side peripheral wall portion 21 forms a base body-side housing chamber 21a, into which the coil assemblies 15 are housed. The inner surface shape of the base body-side peripheral wall portion 21 conforms to the outer surface shape of the coil assemblies 15.

A generally cylindrical first protruding portion 130 configured to protrude frontward is formed on an inner surface of a rear wall of the base body-side peripheral wall portion 21. A circular hollow portion 131 that penetrates in the upper-lower direction shown in the figure is formed inside the first protruding portion 130. The hollow portion 131 serves as a housing hole to house the bus bar terminal body 16.

A generally cylindrical second protruding portion 24a configured to protrude toward the right in the figure is formed on an inner surface of a left wall in the figure of the base body-side peripheral wall portion 21. Further, a generally cylindrical third protruding portion 24b configured to protrude toward the left in the figure is formed on an inner surface of a right wall in the figure of the base body-side peripheral wall portion 21. Outer peripheral portions of the second protruding portion 24a and the third protruding portion 24b are arranged on the sides of four coil assemblies 15 housed in the base body-side housing chamber 21a, and serve as positioning members (movement regulating members) for the coil assemblies 15. The second protruding portion 24a and the third protruding portion 24b have hollowed-out portions 24c formed to penetrate in the upper-lower direction of the figure.

A connector terminal body housing chamber 26a is formed on the right side in the figure of the bottom wall portion 24. The connector terminal body housing chamber 26a extends through the bottom wall portion 24 in the upper-lower direction of the figure. The connector terminal body housing chamber 26a has a generally rectangular shape that is larger in the front-rear direction than in the right-left direction of the figure. The connector terminal body housing chamber 26a is defined by a base body-side coil peripheral wall portion 26 extending upward from the upper surface of the bottom wall portion 24, and a connector-side coil peripheral wall portion 22 extending downward from the lower surface of the bottom wall portion 24. A connector terminal body 17 is disposed in the connector terminal body housing chamber 26a.

Housing-side projections 23 for positioning and fixing the control board 11 rise at each front, rear, right, and left portions of the bottom wall portion 24. Each housing-side projection 23 has a cylindrical shape that is fitted into corresponding board positioning holes 12 formed in the control board 11. The housing-side projections 23 shown in FIG. 2 have their head portions 23a formed into hemispherical shapes by heat caulking. The head portions 23a may have various shapes as long as it can fix the control board 11.

As seen in FIG. 3, the control board assembly 3 includes the control board 11, the coil assemblies 15, the bus bar terminal body 16, and the connector terminal body 17 as electrical components mounted on the control board 11. The coil assemblies 15, the bus bar terminal body 16, and the connector terminal body 17 are electrically connected to the control board 11 via press-fit terminals 14 as connecting terminals. In the following, each of the coil assemblies 15, the bus bar terminal body 16, and the connector terminal body 17 may be referred to simply as an electrical component.

The control board 11 is a generally rectangular board body on which electrical circuits are printed and electrical components such as semiconductor chips are mounted. A plurality of through-holes 13 are formed in the control board 11. The press-fit terminals 14 of each of the coil assemblies 15, the bus bar terminal body 16, and the connector terminal body 17 are inserted into the through-holes 13 and pressed against hole walls of the through-holes 13. The control board 11 performs control based on information obtained from sensors (not shown) provided in the vehicle and programs stored in advance. To be more specific, the control board 11 controls the energization of the coil assemblies 15 and the electric motor M, thereby controlling the opening and closing operation of the solenoid valves 120 and the driving of the electric motor M. Sensors include various types such as pressure sensors, angular velocity sensors, and acceleration sensors.

The coil assembly 15 includes a bobbin 15a made of plastic resin, a coil 15b wound around the bobbin 15a, and a yoke 15c attached to the bobbin 15a. Press-fit terminals 14 rise from the base body-side end portion of the bobbin 15a. Proximal portions of the press-fit terminals 14 are embedded in the bobbin 15a by molding. Four coil assemblies 15 are provided in total, corresponding to the positions where the solenoid valves 120 are located, and as seen in FIG. 1, each coil assembly 15 is housed in the housing 2, surrounding the solenoid valve 120. Each coil assembly 15 is configured to generate a magnetic field around each solenoid valve 120 by energizing the coil 15b from the control board 11 through the press-fit terminals 14, thereby driving the solenoid valve 120.

As seen in FIG. 3, the bus bar terminal body 16 has a bottomed cylindrical tubular portion made of plastic resin. Press-fit terminals 14 rise at the base body-side end portion of the tubular portion of the bus bar terminal body 16. Proximal portions of the press-fit terminals 14 are embedded in the tubular portion of the bus bar terminal body 16 by molding. The bus bar terminal body 16 is mounted on the control board 11 corresponding to the hollow portion 131 of the base body-side peripheral wall portion 21 of the housing 2, and is housed in the hollow portion 131 when the control board assembly 3 is mounted in the housing 2. The bus bar terminal body 16 internally contains a connection portion (not shown), to which the bus bar from the electric motor M is connected. The bus bar terminal body 16 supplies power from the control board 11 to the electric motor M.

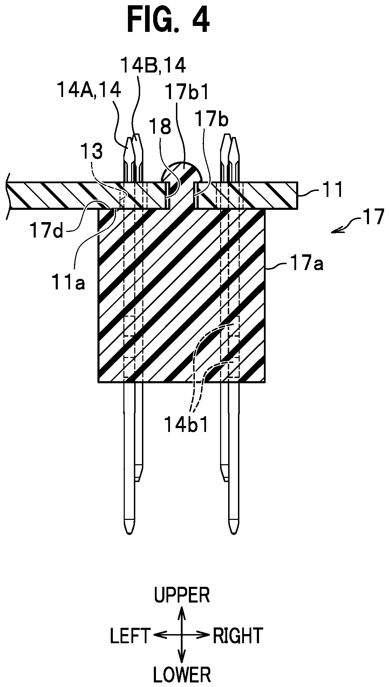

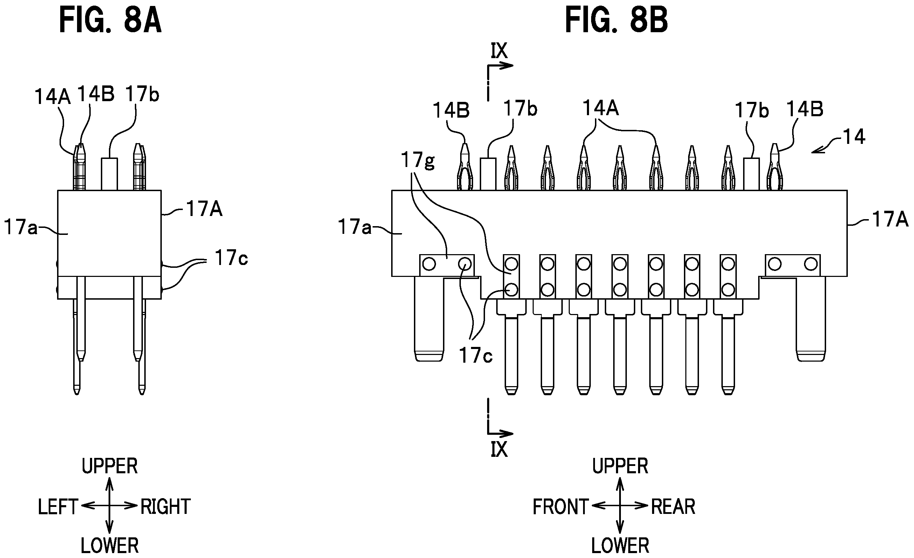

As seen in FIG. 4, the connector terminal body 17 has a terminal main body 17a as a resin member, in which a plurality of press-fit terminals 14 are integrated by molding. As seen in FIG. 3, the terminal main body 17a has a generally prismatic shape extending in the front-rear direction of the figure. A lid member-side surface 17d of the terminal main body 17a is entirely flat and abuts on a base body-side surface 11a of the control board 11. A pair of front and rear fixing projections 17b protrude from the lid member-side surface 17d of the terminal main body 17a (only one is shown in FIG. 4). Each fixing projection 17b has a cylindrical shape that can be fitted into a fixing hole 18 formed in the control board 11 (see FIGS. 8A and 8B). The fixing projection 17b shown in FIG. 4 shows the state in which the head portion 17b1 is formed into a hemispherical shape by heat staking. The head portion 17b1 may have various shapes as long as they can fix the connector terminal body 17.

In the connector terminal body 17, a plurality of press-fit terminals 14 are arranged in two rows on the right and left sides of the terminal main body 17a, spaced apart in the front-rear direction of FIG. 3. Each press-fit terminal 14 has a central portion in the upper-lower direction of FIG. 3 that is embedded (molded) in the terminal main body 17a, while its upper and lower portions are exposed. Each press-fit terminal 14 has an inlet hole 14b1 through which molded resin flows. The connector terminal body 17 according to this embodiment has two types of terminals as press-fit terminals 14, including press-fit terminals 14B located at the front and rear end portions of the terminal main body 17a, and press-fit terminals 14A located at other parts of the terminal main body 17a.

In this connector terminal body 17, the plurality of press-fit terminals 14 are inserted into the through-holes 13 and the fixing projections 17b are fitted into the fixing holes 18, followed by securing the head portions of the fixing projections 17b to the fixing holes 18 by welding or adhesion. This allows for fixing the terminal main body 17a to the lower surface of the control board 11. Then, the connector terminal body 17 is housed in the connector terminal body housing chamber 26a of the housing 2 during the process of mounting the control board assembly 3 in the housing 2. A connector (not shown) of the vehicle is connected to the connector terminal body 17.

The terminal main body 17a may be configured such that the lid member-side surface 17d does not entirely abut on the base body-side surface 11a of the control board 11, and a part of the lid member-side surface 17d abuts on the base body-side surface 11a.

Next, the manufacturing method of the electrical component assembly 1 will be described.

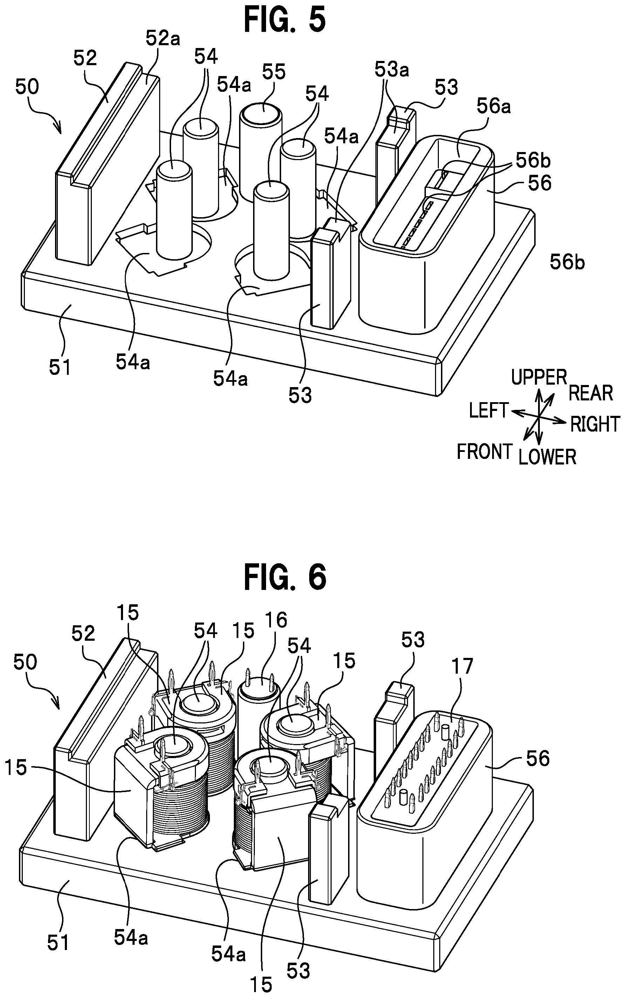

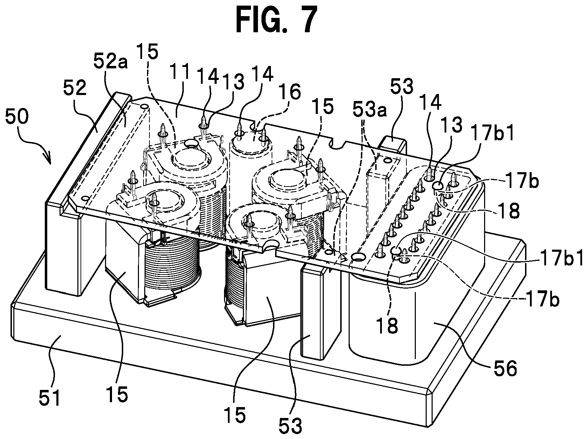

FIG. 5 is a perspective view showing an assembly jig used for manufacturing the control board assembly 3 that constitutes the electrical component assembly 1. FIG. 6 is a perspective view showing the assembly jig with electrical components mounted thereon. FIG. 7 is a perspective view showing the state in which the control board is mounted on the assembly jig with the electrical components mounted thereon.

An assembly jig 50 is a jig used for mounting electric components on the control board 11. As seen in FIG. 5, the assembly jig 50 includes a plate-like base 51, board support portions 52, 53, coil support portions 54, a bus bar terminal body support portion 55, and a connector terminal body support portion 56. The board support portions 52, 53, the coil support portions 54, the bus bar terminal body support portion 55, and the connector terminal body support portion 56 are integrally provided on the base 51.

As viewed in plan view, the base 51 has a generally rectangular shape that is larger in the right-left direction than in the front-rear direction. The board support portion 52, which has a plate shape extending in the front-rear direction, is provided along the left edge portion of the base 51. The upper surface of the board support portion 52 has a placement surface 52a on which the left edge portion of the control board 11 (see FIG. 7) is placed. Board support portions 53, which have a columnar shape, are provided in pairs at the front edge portion and the rear edge portion of the base 51. The upper surfaces of the board support portions 53 have placement surfaces 53a on which the front edge portion and the rear edge portion of the control board 11 are placed.

The coil support portions 54 have a cylindrical shape. A total of four coil support portions 54 are provided in predetermined positions on the base 51. Each coil support portion 54 is formed to be insertable into a bobbin 15a of the coil assembly 15 (see FIG. 6). The base 51 has recesses 54a formed around the base body-side end portions of the coil support portions 54. Each recess 54a has a shape into which the base body-side end portion of the coil assembly 15 can be fitted. With this configuration of the coil support portions 54 and the recesses 54a, the coil assemblies 15 are positioned on the base 51, allowing for the alignment of the press-fit terminals 14 of the coil assemblies 15.

The bus bar terminal body support portion 55 has a cylindrical shape. The bus bar terminal body support portion 55 is provided on the rear end portion side of the base 51 at approximately the center in the right-left direction of the base 51. The bus bar terminal body support portion 55 is formed to be insertable into the bus bar terminal body 16. The connector terminal body support portion 56 has a bottomed rectangular frame shape that is larger in the front-rear direction than in the right-left direction, and is provided along the right edge portion of the base 51. A housing portion 56a is formed inside the connector terminal body support portion 56. The housing portion 56a is sized to house the connector terminal body 17. The bottom portion of the housing portion 56a has insertion holes 56b, into which part of the press-fit terminals 14 of the connector terminal body 17 are inserted.

The manufacturing method of the control board assembly 3 includes an electrical component setting step, an assembling step, and a control board assembly setting step.

The electrical component setting step involves setting electrical components on an assembly jig 50.

An example of the specific procedure is as follows: As seen in FIG. 6, first, coil assemblies 15 are inserted over coil support portions 54, and the base body-side end portions of the coil assemblies 15 are fitted into the recesses 54a. Next, the bus bar terminal body 16 is fitted over the bus bar terminal body support portion 55, and two press-fit terminals 14 thereof are oriented such that they are aligned in the right-left direction. Then, the connector terminal body 17 is moved closer to the housing portion 56a of the connector terminal body support portion 56, and the press-fit terminals 14 are inserted into the insertion holes 56b to house the connector terminal body 17 within the housing portion 56a.

The assembling step involves setting the control board 11 on the assembly jig 50, and electrically connecting the press-fit terminals 14 of each electrical component to the control board 11 to assemble the control board assembly 3.

An example of the specific procedure is as follows: As seen in FIG. 7, the control board 11 is moved closer to the assembly jig 50 from above, and tip end portions of the press-fit terminals 14 of each electrical component are aligned with the through-holes 13 of the control board 11 while aligning the control board 11 such that each portion of the control board 11 is placed on the left-side placement surface 52a and the right-side front and rear placement surfaces 53a. Once the alignment of the control board 11 is completed, the control board 11 is pushed toward the base 51. This causes the tip end portions of the press-fit terminals 14 of each electrical component to be inserted into the through-holes 13 of the control board 11 and pressed against the hole walls of the through-holes 13. Further, the fixing projections 17b of the connector terminal body 17 are fitted into the fixing holes 18 of the control board 11. The fixing projections 17b are heat staked to form the head portions 17b1, 17b1, and the connector terminal body 17 is fixed to the control board 11. Accordingly, the control board assembly 3, in which the electrical components are mounted on the control board 11, is completed.

The control board assembly setting step involves setting the thus assembled control board assembly 3 in the housing 2 for assembling. The control board assembly setting step involves staking to be described later.

In the control board assembly setting step, as seen in FIG. 3, the control board assembly 3 is moved closer to the base body-side housing chamber 25a from above the housing 2, and the coil assemblies 15 mounted on the lower surface of the control board 11 are housed in the base body-side housing chamber 21a from the base body-side housing chamber 25a while the bus bar terminal body 16 is housed in the hollow portion 131 from the base body-side housing chamber 25a. Further, the connector terminal body 17 is housed in the connector terminal body housing chamber 26a.

Then, the board positioning holes 12 of the control board 11 are aligned with the housing-side projections 23 of the housing 2, and the control board 11 is pushed (downward) toward the bottom wall portion 24. This causes the housing-side projections 23 to be fitted into the board positioning holes 12, and the control board assembly 3 is mounted in the housing 2 (see FIG. 2).

The staking step involves securely fixing the control board assembly 3 (the control board 11) to the housing 2 by heat staking.

In the staking step, the housing-side projections 23 fitted into the board positioning holes 12 are melted to heat stake the housing-side projections 23. In other words, the housing-side projections 23 protruding from the board positioning holes 12 are deformed while applying heat to form a portion having a diameter larger than that of the board positioning hole 12. As a result, the housing-side projections 23 act as a retainer, so that the control board assembly 3 (the control board) is securely fixed to the housing 2. This ensures that the control board assembly 3 (the control board) is securely fixed to the housing 2.

According to the electrical component assembly 1 of this embodiment described above, it is possible to adopt an assembling method, in which electrical components are mounted on the control board 11 in advance to form the control board assembly 3, and then this control board assembly 3 is mounted in the housing 2. Therefore, there is no need to use a conventional assembling method, which requires that the electrical components are mounted in the housing in advance, and then the control board is mounted in the housing while aligning connecting terminals (press-fit terminals) of the electrical components with the control board (through-holes of the control board). Consequently, high dimensional accuracy and high assembly accuracy required for aligning the press-fit terminals 14 of the electrical components with the control board 11 (through-holes of the control board) are not required, and the structure of the housing 2 can be simplified.

Since there is no need to insert-mold terminals for connecting the electrical components to the control board 11 into the housing 2, the options for electrical connection methods can be increased.

Further, since the electrical component assembly 1 can be formed simply by mounting the control board assembly 3 in the housing 2, the ease of assembly can be enhanced. As a result, the electrical component assembly 1 according to the present invention can reduce costs.

The terminal main body 17a can be mounted on the control board 11 by fitting the fixing projections 17b of the terminal main body 17a into the fixing holes 18 of the control board 11. Further, since the terminal main body 17a can be directly fixed to the control board 11, the attachment strength is improved, and even when an unintentional external force is applied to the terminal main body 17a, the fixing projections 17b resist the external force. This can effectively prevent an external force load from being applied to a portion where the press-fit terminals 14 and the through-holes 13 are electrically connected.

Since the press-fit terminals 14 are used as connecting terminals, the electrical components and the control board 11 can be easily connected, thereby enhancing the ease of assembly.

The control board assembly 3 can be fixed to the housing 2 by fitting the housing-side projections 23 of the housing 2 into the board positioning holes 12 of the control board 11. Therefore, the control board assembly 3 can be easily mounted in the housing 2, thereby enhancing the ease of assembly.

Since the electrical components are the coil assemblies 15, the bus bar terminal body 16, and the connector terminal body 17, a cost-reduced electrical component assembly 1 can be obtained.

Further, according to the vehicle brake hydraulic pressure control device 100 of the present invention, the coil assemblies 15 (electrical components) can be reliably connected to the control board 11, so that the quality of the product can be improved and the reliability of brake hydraulic pressure control by the device can be improved as well. Further, the vehicle brake hydraulic pressure control device 100 can reduce costs.

Further, the method of manufacturing the electrical component assembly 1 according to the present invention allows for positioning of the electrical components using the assembly jig 50, so that the positioning accuracy of the electrical components is improved. Further, since the press-fit terminals 14 of the electrical components are connected to the control board 11 using the assembly jig 50, high dimensional accuracy and high assembly accuracy for aligning the electrical components with the control board 11 are not required. This can enhance the ease of assembly and reduce costs.

Further, the method of manufacturing the electrical component assembly 1 allows for reliably fixing the control board assembly 3 to the housing 2 by the control board assembly setting step. This can enhance the ease of assembly and reduce costs.

### SECOND EMBODIMENT

Next, an electrical component assembly according to the second embodiment will be described. The difference between this embodiment and the first embodiment is that a connector terminal body 17A manufactured using a different method from that of the first embodiment is used in this embodiment.

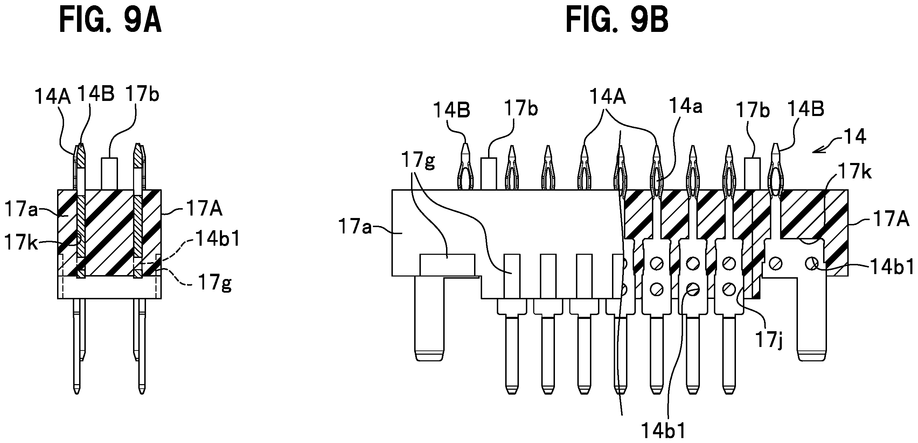

FIGS. 8A and 8B show a connector terminal body used in an electrical component assembly according to the second embodiment of the present invention, in which FIG. 8A is a front view and FIG. 8B is a side view. FIG. 9A and 9B are cross-sectional views of the connector terminal body, in which FIG. 9A is a cross-sectional view taken along the line IX-IX of FIG. 8B and FIG. 9B is partial cross-sectional side view.

As seen in FIGS. 9A and 9B, the connector terminal body 17A according to this embodiment has terminal placement holes 17j, 17k (partially shown in FIG. 9A) formed in the terminal main body 17a, and the press-fit terminals 14 placed in these terminal placement holes 17j, 17k are fixed by molten plastic resin. The terminal placement holes 17j, 17k are pre-formed when the terminal main body 17a is resin molded.

The terminal placement hole 17j is a hole for placing the straight shaped press-fit terminal 14A. The press-fit terminal 14A is inserted into the terminal placement hole 17j from the lower side of the terminal main body 17a. On the other hand, the terminal placement hole 17k is a hole for placing the crank-shaped press-fit terminal 14B. The press-fit terminal 14B is inserted into the terminal placement hole 17k from the lower side of the terminal main body 17a. As seen in FIG. 9B, each of the press-fit terminals 14A, 14B has an inlet hole 14b1 through which molten resin flows.

As seen in FIG. 8B, generally rectangular melting recesses 17g are formed in the side surface of the terminal main body 17a at positions corresponding to each of the press-fit terminals 14A, 14B. Melting thickened portions 17c having a generally hemispherical shape protruding sideward are formed within the melting recesses 17g. The melting thickened portions 17c are formed at positions corresponding to the inlet holes 14b1 of the press-fit terminals 14A, 14B. The melting recesses 17g and the melting thickened portions 17c are similarly formed on the opposite left side of the terminal main body 17a.

When the press-fit terminals 14A, 14B are fixed to the terminal main body 17a during the manufacturing process of the connector terminal body 17A, the press-fit terminals 14A, 14B are inserted into the terminal placement holes 17j, 17k from below, and then heat is applied to the melting thickened portions 17c by clamping the connector terminal body 17A from both the right and left sides. This causes the melting thickened portions 17c to melt, and the molten resin flows into the inlet holes 14b1 of the press-fit terminals 14A, 14B. Accordingly, the press-fit terminals 14A, 14B are molded and fixed to the connector terminal body 17A.

According to this embodiment, the press-fit terminals 14A, 14B can be fixed to the terminal main body 17a by a simple means of applying heat to the melting thickened portions 17c. This can simplify the manufacture of the connector terminal body 17A and enhance the productivity. Further, the options for manufacturing methods can be increased.

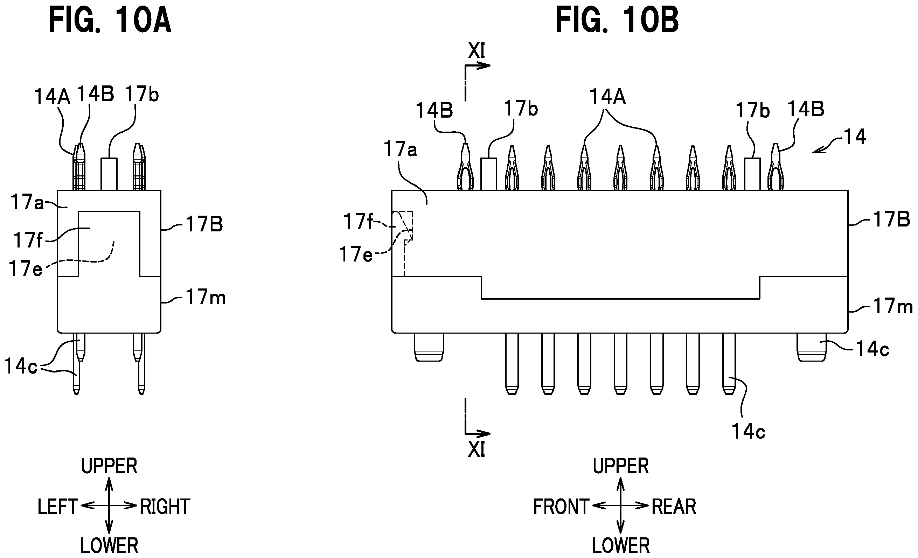

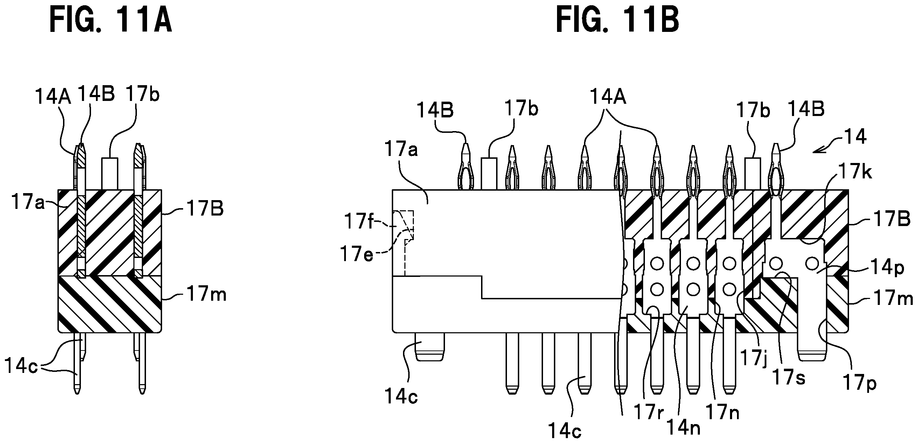

FIGS. 10 and 11 show a connector terminal body 17B in another form, which is manufactured using a different manufacturing method from that of the above embodiment.

FIGS. 10A and 10B show another form of connector terminal body used in the electrical component assembly according to the second embodiment of the present invention, in which FIG. 10A is a front view and FIG. 10B is a side view. FIGS. 11A and 11B are cross-sectional views of the another form of connector terminal body, in which FIG. 11A is a cross-sectional view taken along the line XI-XI of FIG. 10B and FIG. 11B is a partial cross-sectional side view.

As seen in FIGS. 10A and 10B and FIGS. 11A and 11B, the connector terminal body 17B includes a terminal main body 17a, and a plug main body 17m attached to the lower portion of the terminal main body 17a. As seen in FIG. 11B, recess-shaped engagement portions 17e are formed at front and rear portions of the terminal main body 17a. On the other hand, hook portions 17f are formed at front and rear portions of the plug main body 17m. The hook portions 17f are engageable with the engagement portions 17e of the terminal main body 17a. The plug main body 17m is fixed to the terminal main body 17a by engaging the hook portions 17f with the engagement portions 17e of the terminal main body 17a.

As with the above embodiment, the terminal placement holes 17j, 17k are formed in the terminal main body 17a. On the other hand, plug-side placement holes 17n communicating with the terminal placement holes 17j and plug-side placement holes 17p communicating with the terminal placement holes 17k are formed in the plug main body portion 17m. The plug-side placement holes 17n, 17p are shaped to correspond to the lower portions of the press-fit terminals 14A, 14B, and has retaining portions 17r, 17s for holding widened portions 14n, 14p of the press-fit terminals 14A, 14B. The retaining portions 17r, 17s abut on the widened portions 14n, 14p of the press-fit terminals 14A, 14B from below to prevent the press-fit terminals 14A, 14B from being come off.

In the manufacturing process of the connector terminal body 17B as described above, the press-fit terminals 14A, 14B are fixed as follows: First, the press-fit terminals 14A, 14B are inserted into the terminal placement holes 17j, 17k of the terminal main body 17a from below. Then, the plug main body 17m is moved closer to the terminal main body 17a from below, and the upper surface of the plug main body 17m is brought into contact with the lower surface of the terminal main body 17a while inserting the lower portions 14c of the press-fit terminals 14A, 14B into the plug-side placement holes 17n, 17p. This causes the hook portions 17f of the plug main body 17m to be engaged with the engagement portions 17e of the terminal main body 17a, so that the plug main body 17m is fixed to the terminal main body 17a and the press-fit terminals 14A, 14B are retained in place.

According to this embodiment, the press-fit terminals 14A, 14B can be fixed to the terminal main body 17a by a simple means of attaching the plug main body 17m to the terminal main body 17a and engaging them. This can simplify the manufacture of the connector terminal body 17B and enhance the productivity. Further, the options for manufacturing methods can be increased.

Although the embodiments of the present invention have been described above, the present invention is not limited to the above-described embodiments and can be appropriately modified without departing from the gist of the invention.

In the above embodiments, the press-fit terminals 14 are used as an example of the connecting terminals. However, the connecting terminals are not limited to this specific configuration and may be any other connecting terminals.

Further, in the above embodiments, the connector terminal body 17 (electrical component) is provided with the fixing projections 17b, and the control board 11 has fixing holes 18. However, as an alternative, the connector terminal body 17 (electrical component) may have fixing holes, and the control board 11 may have fixing projections.

Further, in the above embodiments, the terminal main body 17a of the connector terminal body 17 is erected and fixed on the control board 11. However, the present invention is not limited to this specific configuration. The coil assemblies 15 and the bus bar terminal body 16 may be erected and fixed on the control board 11.

Further, in the above embodiments, the control board 11 is fitted into the housing 2 and fixed to the housing 2 by heat staking. However, the method of fixing the control board 11 is not limited to this, and various fixing methods can be adopted.

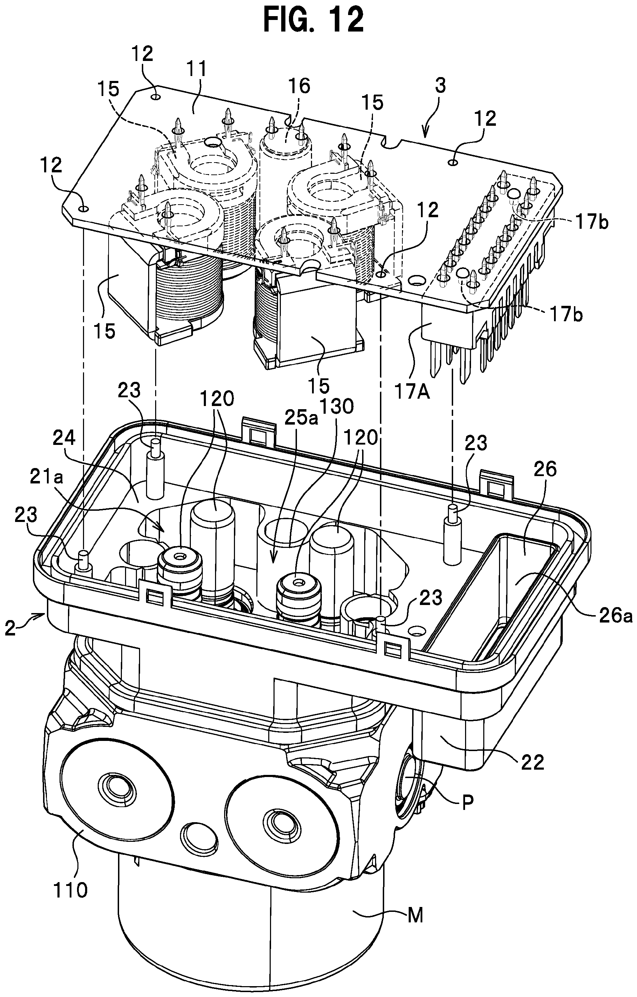

Further, in the first embodiment, the electrical component assembly 1 is fixed to the base body 110 after the electrical component assembly 1 is assembled. However, the present invention is not limited to this specific configuration. As seen in FIG. 12, the housing 2 may be attached to the base body 110 first, and then the control board assembly 3 may be mounted in the housing 2.

### Reference Signs List

- 1: electrical component assembly
- 2: housing
- 3: control board assembly
- 11: control board
- 12: board positioning hole
- 13: through-hole
- 14: press-fit terminal (connecting terminal)
- 15: coil assembly (electrical component)
- 16: bus bar terminal body (electrical component)
- 17: connector terminal body (electrical component)
- 17A, 17B: connector terminal body (electrical component)
- 17a: terminal main body (resin member)
- 17b: fixing projection
- 17b1: head portion
- 18: fixing hole
- 23: housing-side projection
- 23a: head portion
- 100: vehicle brake hydraulic pressure control device

## Claims

1. An electrical component assembly comprising a control board assembly mounted in a housing, wherein
the control board assembly comprises a control board and an electrical component mounted on the control board via connecting terminals.

2. The electrical component assembly according to claim 1, wherein
the control board has fixing holes for fixing the electrical component, and
the electrical component includes a terminal main body in which the connecting terminals are integrated with resin, and fixing projections provided on the terminal main body and fitted into the fixing holes.

3. The electrical component assembly according to claim 1 or 2, wherein
the connecting terminals are press-fit terminals inserted into through-holes formed in the control board.

4. The electrical component assembly according to any one of claims 1 to 3, further comprising:
board positioning holes formed in the control board for fixing the control board to the housing; and
housing-side projections formed on the housing for fixing the control board and fitted into the board positioning holes.

5. The electrical component assembly according to any one of claims 1 to 4, wherein
the electrical component in the control board assembly is either one of a coil assembly for driving a solenoid valve, a bus bar terminal body connected to an electric motor, and a connector terminal body.

6. A vehicle brake hydraulic pressure control device equipped with the electrical component assembly according to any one of claims 1 to 5, wherein
the vehicle brake hydraulic pressure control device is connected between a master cylinder and a wheel brake to control brake hydraulic pressure acting on the wheel brake.

7. A method of manufacturing the electrical component assembly according to any one of claims 1 to 5, comprising the steps of:
an electrical component setting step of setting the electrical component on an assembly jig;
an assembling step of setting the control board on the assembly jig, and electrically connecting the connecting terminals of the electrical component set on the assembly jig in the electrical component setting step to the control board to assemble the control board assembly; and
a control board assembly setting step of setting the control board assembly assembled in the assembling step in the housing.

8. A method of manufacturing the electrical component assembly according to claim 4, comprising the steps of:
an electrical component setting step of setting the electrical component on an assembly jig;
an assembling step of setting the control board on the assembly jig, and electrically connecting the connecting terminals of the electrical component set on the assembly jig in the electrical component setting step to the control board to assemble the control board assembly; and
a control board assembly setting step of setting the control board assembly assembled in the assembling step in the housing, wherein
the control board assembly setting step comprises the steps of:
fitting the housing-side projections into the board positioning holes; and
heat staking the housing-side projections.
